# FASCICULE DE BREVET EUROPEEN

(11) **EP 2 093 870 B1**
(45) Date de publication et mention de la délivrance du brevet: **07.09.2011**
(21) Numéro de dépôt: 09152672.3
(22) Date de dépôt: 12.02.2009
(51) Int. Cl.: H02M 1/32, H02M 5/458, H02H 7/122

(54) **Dispositif de protection d'un variateur de vitesse incluant une inductance de filtrage**
Schutzvorrichtung eines stufenlosen Drehzahlreglers einschließlich Filterdrossel
Protection device for a variable speed drive including a filter choke

(30) Priorité: 21.02.2008 FR 0851102
(43) Date de publication de la demande: 26.08.2009
(73) Titulaire: Schneider Toshiba Inverter Europe SAS, 27120 Pacy sur Eure (FR)
(72) Inventeur: Baudesson, Philippe, 27220 La Boissiere (FR)
(74) Mandataire: Bié, Nicolas

(56) Documents cités:
- EP-A- 1 835 609
- FR-A- 2 538 187
- US-A1- 2004 246 641
- US-A1- 2006 238 940
- US-A1- 2007 147 099
- US-A1- 2007 262 806
- US-B1- 6 445 557

## Description

La présente invention se rapporte à un variateur de vitesse doté d'un dispositif de protection contre les surintensités générées par des surtensions ou des sous-tensions sur le réseau électrique d'alimentation.

De manière connue, un variateur de vitesse est connecté au réseau électrique d'alimentation et destiné à commander une charge électrique. Il comporte en entrée un module redresseur de tension qui transforme une tension alternative fournie par le réseau électrique en une tension continue et qui alimente en aval un bus de puissance doté d'une ligne positive et d'une ligne négative. Un condensateur de filtrage, appelé communément condensateur de bus, est monté entre une borne positive et une borne négative du bus de puissance. En sortie, le variateur comporte un module onduleur alimenté par le bus de puissance, permettant de générer, à partir de la tension continue, une tension alternative qui peut être d'amplitude et de fréquence variables en utilisant des interrupteurs électroniques par exemple de type transistor IGBT commandés par Modulation à Largeur d'Impulsions (MLI ou PWM).

En outre, afin de limiter le taux d'harmoniques de distorsion en courant (appelé THDi) en entrée du variateur, le variateur peut comporter une inductance de filtrage (appelé "DC choke") placée sur le bus continu entre le module redresseur et le condensateur du bus de puissance.

Le réseau électrique d'alimentation peut subir différents types de perturbations telles que des surtensions ou des sous-tensions. Les perturbations peuvent être de forte amplitude et de courte durée, donc faiblement énergisantes ou de faible amplitude et de longue durée, donc fortement énergisantes. Si les perturbations sont fortement énergisantes, certains composants du variateur comme les diodes du module redresseur, le condensateur de bus ou les transistors du module onduleur peuvent se détériorer.

Le document FR2538187 décrit un dispositif d'alimentation en courant pour un appareil utilisant du courant alternatif. Il comporte un onduleur, un redresseur, un hacheur et un circuit de filtrage. Le dispositif décrit permet notamment de protéger l'onduleur contre les surintensités.

Le but de l'invention est donc de proposer un variateur de vitesse permettant d'absorber les perturbations du réseau électrique sans dommage.

Ce but est atteint par un variateur de vitesse comportant :
en entrée, un module redresseur pour générer sur un bus de puissance une tension continue à partir d'une tension alternative disponible sur un réseau électrique d'alimentation,
   - un condensateur de bus connecté entre une ligne positive et une ligne négative du bus de puissance, et
   - un module onduleur alimenté par le bus de puissance et commandé pour délivrer une tension alternative à une charge électrique,
   - un interrupteur électronique placé sur le bus de puissance entre le module redresseur et le condensateur de bus,
   - une diode connectée entre la ligne négative et la ligne positive du bus de puissance, entre l'interrupteur électronique et l'inductance de filtrage,
   - des moyens de commande de l'interrupteur électronique
   - un dispositif de protection du variateur contre les surintensités liées à des variations de tension sur le réseau électrique d'alimentation,
caractérisé en ce qu'il comporte:
- une inductance de filtrage connectée sur la ligne positive du bus de puissance en série entre l'interrupteur électronique et le condensateur de bus

Selon une particularité, le dispositif de protection est monté sur la ligne positive du bus de puissance.

De préférence, l'interrupteur électronique utilisé est un transistor de type JFET normalement fermé, réalisé en carbure de silicium.

Selon une autre particularité, les moyens de commande du transistor JFET sont connectés entre la ligne positive et la ligne négative du bus de puissance. Ces moyens de commande comprennent par exemple un circuit pompe de charge apte à appliquer une tension de commande au transistor JFET.

Selon une autre particularité, les moyens de commande comportent des moyens de mémorisation mémorisant une valeur seuil pour la tension mesurée aux bornes du transistor JFET au-dessus de laquelle le transistor JFET est commandé à l'ouverture par les moyens de commande. Les moyens de mémorisation mémorisent également une valeur seuil pour la tension mesurée entre la ligne positive et la ligne négative du bus de puissance au-dessus de laquelle le transistor JFET est commandé à l'ouverture.

Selon une autre particularité, le variateur comporte en outre un dispositif pour protéger le module redresseur contre les surtensions. Ce dispositif pour protéger le module redresseur contre les surtensions comporte un transistor de limitation de type JFET normalement fermé et une diode Zener connectés tous deux en parallèle entre la ligne positive et la ligne négative du bus de puissance. En variante, ce dispositif pour protéger le module redresseur contre les surtensions peut comporter une varistance de type GMOV connectée entre la ligne positive et la ligne négative du bus de puissance.

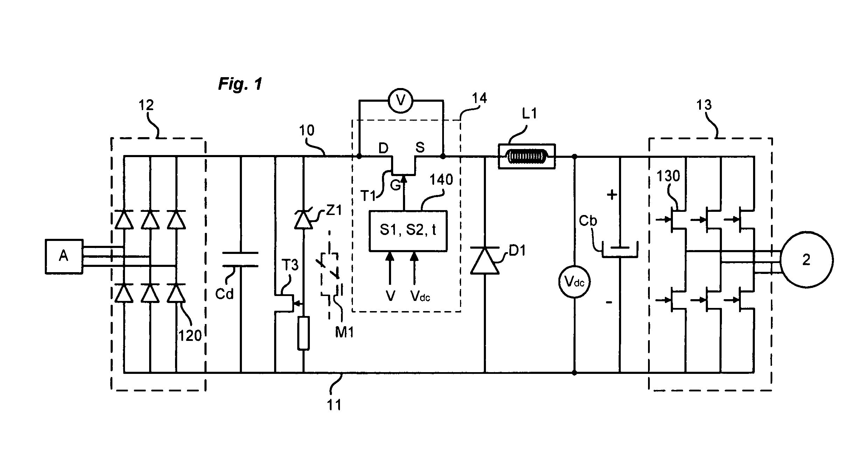

D'autres caractéristiques et avantages vont apparaître dans la description détaillée qui suit en se référant à un mode de réalisation donné à titre d'exemple et représenté par les dessins annexés sur lesquels la figure 1 représente de manière simplifiée un variateur de vitesse doté du dispositif de protection de l'invention.

En référence à la figure 1, un variateur de vitesse 1 comporte une source de tension continue qui alimente un bus de puissance avec une tension continue Vdc (par exemple de l'ordre de 200 à 800Vcc ou plus, suivant les conditions d'utilisation). Le bus de puissance est composé d'une ligne positive 10 et d'une ligne négative 11. Un condensateur de bus Cb est habituellement utilisé pour maintenir constante la tension continue Vdc du bus de puissance. Ce condensateur de bus Cb est connecté entre une borne positive et une borne négative du bus de puissance et est généralement de type électrolytique.

Sur la figure 1, le variateur 1 comporte en entrée un module redresseur 12 qui est destiné à redresser une tension triphasée alternative provenant d'un réseau d'alimentation extérieur A (par exemple un réseau électrique triphasé 380Vac). Ce module redresseur 12 utilise avantageusement des diodes 120 qui sont plus économiques et plus fiables que des thyristors.

Le variateur de vitesse 1 comporte ensuite en sortie un module onduleur 13 permettant, à partir du bus de puissance, de commander une charge électrique 2 avec une tension alternative qui peut être d'amplitude et de fréquence variables. Le module onduleur 13 utilise pour cela une commande par Modulation à Largeur d'Impulsions (MLI ou PWM) pour commander des interrupteurs électroniques de puissance 130 montés sur chaque phase. Ces interrupteurs sont des transistors de puissance, par exemple de type IGBT, commandés par un module de commande, non représenté sur la figure 1. Sur la figure 1, le module onduleur 13 comporte trois bras pour délivrer une tension alternative triphasée à la charge électrique 2, chaque bras étant doté de deux transistors de puissance en série entre une borne positive et une borne négative du bus de puissance, soit un total de six transistors de puissance.

Le variateur comporte également une inductance de filtrage L1 ("DC Choke") montée sur la ligne positive 10 du bus de puissance, entre le module redresseur 12 et le condensateur de bus Cb. Cette inductance de filtrage sert à limiter le taux d'harmoniques de distorsion en courant ("THDi") en entrée du variateur.

L'invention consiste à placer un dispositif de protection 14 dans le variateur pour le protéger contre les surintensités liées à des variations de tension sur le réseau électrique d'alimentation A.

Ces surintensités peuvent être générées par deux phénomènes distincts :
- lors d'une surtension, il se produit un fort appel de courant dans le condensateur de bus Cb ce qui peut causer la détérioration du pont de diodes du module redresseur 12 et une forte surtension sur le bus de puissance ce qui peut causer la détérioration du module onduleur 13 et du condensateur de bus Cb,
- lors d'un retour à la normale, après une sous-tension, il se produit également un fort appel de courant dans le condensateur de bus Cb ce qui peut causer la détérioration du pont de diodes du module redresseur 12.

Il est donc nécessaire de limiter le courant d'appel dans le module redresseur 12 pour le préserver lors d'une surtension ou après une sous-tension apparaissant sur le réseau A.

Pour cela le dispositif 14 de l'invention comporte notamment un premier interrupteur électronique par exemple de type JFET, MOSFET ou IGBT normalement ouvert ou normalement fermé.

Préférentiellement, le premier interrupteur électronique utilisé est réalisé dans un matériau à grande énergie de bande interdite (appelé également "matériau à grand gap" ou "wide-band gap material"), c'est-à-dire présentant une faible résistance à l'état passant R_{dson} et capable de supporter des tensions importantes (supérieures à 1000 V), comme par exemple du carbure de silicium (SiC) ou du nitrure de gallium (GaN).

Ce premier interrupteur électronique est préférentiellement de type JFET. Un transistor JFET est un interrupteur électronique de puissance connu qui comporte une Grille de commande (G) dont la fonction est d'autoriser ou non le passage d'un courant entre un Drain (D) et une Source (S). Un tel transistor est dit de type normalement fermé (ou "Normally ON") si la tension V_{GS} entre la Grille et la Source est proche de zéro. Cela signifie que le chemin Drain-Source est passant ou conducteur en l'absence de tension de commande V_{GS}. Inversement un transistor JFET est dit du type normalement ouvert (ou "normally OFF") si le chemin Drain-Source n'est pas conducteur en l'absence de tension V_{GS} entre Grille et Source.

De plus, il s'avère qu'un interrupteur électronique de type transistor JFET normalement fermé offre de meilleures performances que d'autres types d'interrupteurs électroniques de puissance commandés en tension, tels que des MOSFET, des IGBT ou même des interrupteurs de type JFET normalement ouvert. En effet, un tel interrupteur présente notamment les avantages d'être plus rapide à commuter, de générer moins de pertes en conduction à l'état passant (faible résistance R_{DSon} à l'état passant), d'avoir une meilleure tenue en température et d'avoir une taille plus petite.

Le dispositif 14 de protection de l'invention comporte donc préférentiellement un transistor JFET T1, normalement fermé, réalisé dans un matériau à grande énergie de bande interdite comme le carbure de silicium ou le nitrure de gallium. Le transistor T1 est monté sur la ligne positive 10 du bus de puissance en série entre le module redresseur 12 et l'inductance de filtrage L1. Le dispositif comporte également une diode D1 montée entre la ligne négative 11 et la ligne positive 10 du bus de puissance, en parallèle du condensateur de bus Cb, entre le transistor T1 et l'inductance de filtrage L1. Cette diode D1 est orientée passante de la ligne négative 11 vers la ligne positive 10 du bus de puissance.

Le dispositif de l'invention comporte des moyens de commande 140 du transistor T1. Ces moyens de commande 140 comprennent notamment des moyens de traitement pour décider de la commutation du transistor T1, des moyens de mémorisation et une alimentation destinée à la commande du transistor T1. L'alimentation employée est par exemple un circuit pompe de charge ("charge pump circuit" en anglais) qui comprend par exemple un condensateur se chargeant à partir du bus de puissance lors de la pré-charge du circuit et une diode Zener montée en parallèle du condensateur. Le circuit pompe de charge destiné à la commande du transistor T1 prend sa source sur la Source du transistor T1. Il est également possible d'utiliser une alimentation externe isolée pour commander le transistor T1 mais dans ce cas les moyens de commande 140 ne sont plus alimentés directement à partir du bus de puissance et le circuit n'est donc plus autonome. Dans ce cas, il serait envisageable d'utiliser un transistor JFET T1 de type normalement ouvert. Les moyens de commande comportent également un monostable déclenché lorsque le transistor T1 est commandé à l'ouverture de manière à faire repasser le transistor T1 à l'état fermé au bout d'une durée t déterminée.

Le variateur 1 comporte en outre un condensateur de découplage Cd connecté entre la ligne positive 10 et la ligne négative 11 du bus de puissance, en aval du module redresseur 12 et en amont du dispositif de protection 14. Ce condensateur de découplage Cd sert à écrêter, sur une durée limitée, les fortes surtensions apparaissant sur le réseau électrique d'alimentation A.

Selon que le variateur 1 est en pré-charge au démarrage, subit une surtension réseau ou une sous-tension, le dispositif de protection 14 du variateur 1 fonctionne de la manière suivante :
- Au démarrage :
   Le transistor T1 est initialement passant. Sa résistance à l'état passant (Rdson) est très faible. La tension V mesurée aux bornes du transistor T1 est donc également très faible.
   Le transistor T1 passe en limitation dés que le courant qui le traverse devient supérieur à son courant de limitation. Le courant de limitation est suffisant pour charger le condensateur du circuit pompe de charge du transistor T1. Une fois que ce condensateur est chargé, les moyens de commande 140 disposent de suffisamment d'énergie pour commander le transistor T1. Ensuite, il s'agit de charger le condensateur de bus Cb en utilisant l'inductance de filtrage L1.

Lors du chargement du condensateur de bus Cb, le courant circulant à travers le transistor T1 augmente rapidement jusqu'à ce que le transistor T1 passe en limitation. La résistance du transistor T1 augmente alors pour limiter le courant ce qui entraîne une augmentation de la tension V mesurée aux bornes du transistor T1. Si la tension V aux bornes du transistor T1 dépasse une valeur seuil S1 mémorisée, par exemple fixée à 3 Volts, alors les moyens de commande appliquent une tension de commande sur le transistor T1 pour le piloter à l'ouverture. Le monostable, par exemple d'une durée t de 1 ms, est déclenché lorsque le transistor T1 est commandé à l'ouverture et permet de refaire passer le transistor T1 à l'état fermé au bout d'une durée t déterminée. Pendant la durée t du monostable, le transistor T1 est donc à l'état ouvert. L'énergie qui a été emmagasinée par l'inductance de filtrage L1 est alors restituée pour charger le condensateur de bus Cb via la diode D1 qui fonctionne alors comme une diode de roue libre. Le monostable est dimensionné pour s'assurer d'une durée suffisante pour décharger l'inductance de filtrage dans le condensateur de bus Cb. Lorsque la durée t du monostable est terminée, le transistor T1 est piloté à la fermeture en coupant son alimentation et un nouveau cycle de chargement/déchargement de l'inductance de filtrage L1 peut débuter comme décrit ci-dessus si la tension V mesurée aux bornes du transistor T1 repasse au-dessus de la valeur seuil S1.

Au bout de quelques cycles, le condensateur de bus Cb est entièrement chargé. Le nombre de cycles dépend de la valeur de l'inductance de filtrage L1. Il peut être préférable de limiter le nombre de cycles de commutation du transistor T1 afin d'éviter de générer trop de perturbations et d'avoir trop d'énergie à dissiper à chaque commutation.

Lorsque la tension V mesurée aux bornes du transistor T1 se maintient au-dessous de la valeur seuil S1, le transistor T1 reste à l'état fermé.

### - Surtension réseau

Lorsqu'une surtension se produit, il se produit un fort appel de courant dans le condensateur de bus Cb. Le courant circulant à travers le transistor T1 augmente donc rapidement jusqu'à ce que le transistor T1 passe en limitation. La résistance du transistor T1 augmente alors pour limiter le courant ce qui entraîne une augmentation de la tension V mesurée aux bornes du transistor T1. Si la tension V aux bornes du transistor T1 dépasse la valeur seuil S1 mémorisée, par exemple fixée à 3 Volts, alors les moyens de commande appliquent une tension de commande sur le transistor T1 pour le piloter à l'ouverture.

Le monostable, par exemple d'une durée t de 1 ms, est déclenché lorsque le transistor T1 est commandé à l'ouverture et permet de refaire passer le transistor T1 à l'état fermé au bout d'une durée déterminée. Pendant la durée t du monostable, le transistor T1 est donc à l'état ouvert. L'énergie emmagasinée alors par l'inductance de filtrage L1 est restituée pour charger le condensateur de bus Cb via la diode D1 qui fonctionne alors comme une diode de roue libre. Le monostable est calculé pour s'assurer d'une durée suffisante pour décharger l'inductance de filtrage L1. Lorsque la durée t du monostable est terminée, le transistor T1 est piloté à la fermeture et un nouveau cycle de chargement/déchargement de l'inductance de filtrage L1 peut débuter comme décrit ci-dessus. Avec l'aide du transistor T1, l'inductance de filtrage L1 sert ainsi à absorber les surintensités générées par la surtension.

Lorsque la surtension est terminée, la tension mesurée aux bornes du transistor T1 se maintient sous la valeur seuil S1 et le transistor T1 reste à l'état fermé. Il est possible de réduire le courant maximal de limitation en abaissant la valeur seuil S1. Le transistor T1 est alors commandé à l'ouverture avant qu'il passe en limitation, la tension à ses bornes étant proportionnelle au produit de sa résistance à l'état passant et du courant le traversant.

De plus, en cas de surtension, si la tension Vdc mesurée aux bornes du condensateur de bus Cb dépasse une seconde valeur seuil déterminée S2, par exemple fixée à 750 Volts, le transistor T1 est commandé automatiquement à l'ouverture afin de protéger en tension le condensateur de bus Cb et l'étage onduleur.

### - Sous-tension réseau

Durant une sous-tension sur le réseau d'alimentation du variateur, le transistor T1 est fermé et le condensateur de bus Cb se décharge si une charge électrique 2 est présente sur l'onduleur ou ne se décharge pas si aucune charge électrique 2 n'est présente sur l'onduleur. Après la fin de la sous-tension, lors du retour à une tension normale, si le condensateur de bus Cb n'a pas été déchargé, aucun appel de courant ne se produit. En revanche, si pendant la sous-tension, le condensateur de bus Cb s'est déchargé pour alimenter la charge électrique 2, le condensateur de bus Cb doit être rechargé lors du retour à une tension normale, ce qui produit un fort appel de courant à travers l'inductance de filtrage L1 et le condensateur de bus Cb. Le fonctionnement est alors identique à celui décrit pour le démarrage et la surtension, c'est-à-dire que le transistor T1 passe en limitation puis est commandé à l'ouverture lorsque la tension V mesurée à ses bornes devient supérieure à la valeur seuil S1. L'inductance L1 peut alors se décharger dans le condensateur de bus Cb pendant la durée t du monostable. Après la fin de la durée t du monostable, le transistor T1 est commandé à la fermeture pour alimenter l'inductance de filtrage L1. Des cycles successifs d'ouverture/fermeture du transistor T1 sont effectués tant que la tension V aux bornes du transistor T1 repasse au-dessus de la valeur seuil S1 et donc tant que le retour de sous-tension n'a pas été absorbé.

La description ci-dessus des différentes séquences de commande est effectuée en partant d'un dispositif de protection doté d'un transistor T1 normalement fermé. Cependant, elle doit être comprise de manière identique avec l'emploi d'un transistor T1 de type normalement ouvert. Cependant, dans ce cas, une alimentation isolée spécifique est nécessaire dans les moyens de commande pour commander le transistor T1 normalement ouvert.

Selon l'invention, ce dispositif convient bien lorsque le variateur 1 comporte une inductance de filtrage L1 ("DC choke") sur le bus de puissance et lorsque le condensateur de bus présente une capacité de forte valeur (par exemple supérieur à 80µF par kW).

Cette solution seule a cependant l'inconvénient de créer une forte variation d'intensité (fort di/dt) au niveau du module redresseur 12 lorsque le transistor T1 est commandé à l'ouverture lors d'une surtension. Les inductances d'entrée ou inductance de ligne (non représentées sur la figure 1) du variateur 1 subissent alors une forte surtension transitoire ce qui peut entraîner la casse du pont de diodes du module redresseur 12.

Afin de dissiper l'énergie ainsi produite, il est possible d'utiliser la caractéristique d'avalanche du transistor T1. Le transistor T1 devient alors passant automatiquement si la tension V à ses bornes dépasse son seuil d'avalanche. Si la tension aux bornes du condensateur de bus atteint 700 Volts et que les diodes du module redresseur sont prévues pour supporter une tension de 1600 volts, le transistor T1 doit par exemple être dimensionné avec un seuil d'avalanche fixé à 800 Volts. Cependant le transistor T1 doit également être dimensionné pour pouvoir absorber une forte énergie provenant du réseau A, laquelle est proportionnelle à l'inductance de ligne du réseau.

En variante, pour dissiper l'énergie produite, on peut de préférence ajouter en parallèle du condensateur de découplage Cd, une varistance de type GMov M1 (montrée en traits pointillés) ou un transistor JFET T3 normalement ouvert doté en parallèle d'une diode Zener Z1. Le transistor T3 sera par exemple commandé à la fermeture en utilisant sa caractéristique d'avalanche ou à l'aide d'une commande spécifique.

## Revendications

1. Variateur de vitesse comportant :
- en entrée, un module redresseur (12) pour générer sur un bus de puissance (10, 11) une tension continue à partir d'une tension alternative disponible sur un réseau électrique d'alimentation (A),
- un condensateur de bus (Cb) connecté entre une ligne positive et une ligne négative du bus de puissance et destiné à maintenir constante la tension continue sur le bus de puissance, et
- un module onduleur (13) alimenté par le bus de puissance et commandé pour délivrer une tension alternative à une charge électrique (2), - un interrupteur électronique (T1) placé sur le bus de puissance entre le module redresseur (12) et le condensateur de bus (Cb), - une diode connectée entre la ligne négative et la ligne positive du bus de puissance, entre l'interrupteur électronique et l'inductance de filtrage (L1), - des moyens de commande (140) de l'interrupteur électronique
- un dispositif de protection (14) du variateur contre les surintensités liées à des variations de tension sur le réseau électrique d'alimentation (A),
**caractérisé en ce qu'**il comporte:
- une inductance de filtrage (L1) connectée sur la ligne positive du bus de puissance en série entre l'interrupteur électronique (14) et le condensateur de bus (Cb).

2. Variateur selon la revendication 1, **caractérisé en ce que** le dispositif de protection (14) est monté sur la ligne positive (10) du bus de puissance.

3. Variateur selon la revendication 1 ou 2, **caractérisé en ce que** l'interrupteur électronique est un transistor (T1) de type JFET.

4. Variateur selon la revendication 3, **caractérisé en ce que** le transistor JFET (T1) est réalisé en carbure de silicium.

5. Variateur selon la revendication 3 ou 4, **caractérisé en ce que** le transistor JFET (T1) est normalement fermé.

6. Variateur selon l'une des revendications 3 à 5, **caractérisé en ce que** les moyens de commande (140) du transistor JFET (T1) sont connectés entre la ligne positive (10) et la ligne négative (11) du bus de puissance.

7. Variateur selon la revendication 6, **caractérisé en ce que** les moyens de commande (140) comprennent un circuit pompe de charge apte à appliquer une tension de commande au transistor JFET.

8. Variateur selon l'une des revendications 3 à 7, **caractérisé en ce que** les moyens de commande (140) comportent des moyens de mémorisation mémorisant une valeur seuil (S1) pour la tension (V) mesurée aux bornes du transistor JFET (T1) au-dessus de laquelle le transistor JFET (T1) est commandé à l'ouverture par les moyens de commande (140).

9. Variateur selon l'une des revendications 3 à 8, **caractérisé en ce que** les moyens de commande (140) comportent des moyens de mémorisation mémorisant une valeur seuil (S2) pour la tension mesurée entre la ligne positive (10) et la ligne négative (11) du bus de puissance au-dessus de laquelle le transistor JFET (T1) est commandé à l'ouverture.

10. Variateur selon l'une des revendications 1 à 9, **caractérisé en ce qu'**il comporte en outre un dispositif pour protéger le module redresseur (12) contre les surtensions.

11. Variateur selon la revendication 10, **caractérisé en ce que** le dispositif pour protéger le module redresseur (12) contre les surtensions comporte un transistor de limitation (T3) de type JFET normalement fermé et une diode Zener (Z1) connectés tous deux en parallèle entre la ligne positive (10) et la ligne négative (11) du bus de puissance.

12. Variateur selon la revendication 10, **caractérisé en ce que** le dispositif pour protéger le module redresseur (12) contre les surtensions comporte une varistance (M1) de type GMOV connectée entre la ligne positive (10) et la ligne négative (11) du bus de puissance.

## Claims

1. Variable speed drive comprising:
- as input, a rectifier module (12) for generating a direct voltage on a power bus (10, 11) from an alternating voltage available on an electrical power-supply network (A);
- a bus capacitor (Cb) connected between a positive line and a negative line of the power bus and intended to maintain the direct voltage on the power bus constant; and
- an inverter module (13) powered by the power bus and controlled to deliver an alternating voltage to an electrical load (2);
- an electronic switch (T1) located on the power bus between the rectifier module (12) and the bus capacitor (Cb);
- a diode connected between the negative line and the positive line of the power bus, between the electronic switch and the filtering inductor (L1);
- control means (140) for controlling the electronic switch;
- a protection device (14) for protecting the variable speed drive against overcurrents due to voltage variations on the electrical power-supply network (A);
**characterized in that** it comprises:
- a filtering inductor (L1) connected on the positive line of the power bus in series between the electronic switch (14) and the bus capacitor (Cb).

2. Variable speed drive according to Claim 1, **characterized in that** the protection device (14) is mounted on the positive line (10) of the power bus.

3. Variable speed drive according to Claim 1 or 2, **characterized in that** the electronic switch is a JFET transistor (T1).

4. Variable speed drive according to Claim 3, **characterized in that** the JFET transistor (T1) is made of silicon carbide.

5. Variable speed drive according to Claim 3 or 4, **characterized in that** the JFET transistor (T1) is normally on.

6. Variable speed drive according to one of Claims 3 to 5, **characterized in that** the control means (140) for controlling the JFET transistor (T1) are connected between the positive line (10) and the negative line (11) of the power bus.

7. Variable speed drive according to Claim 6, **characterized in that** these control means (140) comprise a charge pump circuit capable of applying a control voltage to the JFET transistor.

8. Variable speed drive according to one of Claims 3 to 7, **characterized in that** the control means (140) comprise memory means storing a threshold value (S1) for the voltage (V) measured at the terminals of the JFET transistor (T1) above which the JFET transistor (T1) is switched off by the control means (140).

9. Variable speed drive according to one of Claims 3 to 8, **characterized in that** the control means (140) comprise memory means storing a threshold value (S2) for the voltage measured between the positive line (10) and the negative line (11) of the power bus above which the JFET transistor (T1) is switched off.

10. Variable speed drive according to one of Claims 1 to 9, **characterized in that** it additionally comprises a device for protecting the rectifier module (12) against overvoltages.

11. Variable speed drive according to Claim 10, **characterized in that** the device for protecting the rectifier module (12) against overvoltages comprises a normally-on JFET limiting transistor (T3) and a Zener diode (Z1), both connected in parallel between the positive line (10) and the negative line (11) of the power bus.

12. Variable speed drive according to Claim 10, **characterized in that** the device for protecting the rectifier module (12) against overvoltages comprises a GMOV varistor (M1) connected between the positive line (10) and the negative line (11) of the power bus.

## Patentansprüche

1. Stromrichtervorrichtung, die umfasst:
- am Eingang ein Gleichrichtermodul (12), um auf einem Leistungsbus (10, 11) ausgehend von einer Wechselspannung, die in einem Stromversorgungsnetz (A) zur Verfügung steht, eine Gleichspannung zu erzeugen,
- einen Buskondensator (Cb), der zwischen eine positive Leitung und eine negative Leitung des Leistungsbusses geschaltet ist und dazu vorgesehen ist, die Gleichspannung auf dem Leistungsbus konstant zu halten, und
- ein Wechselrichtermodul (13), das durch den Leistungsbus versorgt wird und gesteuert wird, um an eine elektrische Last (2) eine Wechselspannung zu liefern,
- einen elektronischen Unterbrecher (T1), der auf dem Leistungsbus zwischen das Gleichrichtermodul (12) und den Buskondensator (Cb) geschaltet ist,
- eine Diode, die zwischen dem elektronischen Unterbrecher und einer Filterungsinduktivität (L1) zwischen die negative Leitung und die positive Leitung des Leistungsbusses geschaltet ist,
- Steuermittel (140) des elektronischen Unterbrechers,
- eine Schutzvorrichtung (14) der Stromsrichtervorrichtung vor Überlasten, die mit Spannungsschwankungen in dem Stromversorgungsnetz (A) einhergehen,
**dadurch gekennzeichnet, dass** sie umfasst:
- die Filterungsinduktivität (L1), die in der positiven Leitung des Leistungsbusses zwischen dem elektronischen Unterbrecher (14) und dem Buskondensator (Cb) in Serie geschaltet ist.

2. Stromrichtervorrichtung nach Anspruch 1, **dadurch gekennzeichnet, dass** die Schutzvorrichtung (14) an der positiven Leitung (10) des Leistungsbusses angebracht ist.

3. Stromrichtervorrichtung nach Anspruch 1 oder 2, **dadurch gekennzeichnet, dass** der elektronische Unterbrecher ein Transistor des JFET-Typs (T1) ist.

4. Stromrichtervorrichtung nach Anspruch 3, **dadurch gekennzeichnet, dass** der JFET-Transistor (T1) aus Siliciumcarbid hergestellt ist.

5. Stromrichtervorrichtung nach Anspruch 3 oder 4, **dadurch gekennzeichnet, dass** der JFET-Transistor (T1) normalerweise geschlossen ist.

6. Stromrichtervorrichtung nach einem der Ansprüche 3 bis 5, **dadurch gekennzeichnet, dass** die Steuermittel (140) des JFET-Transistors (T1) zwischen die positive Leitung (10) und die negative Leitung (11) des Leistungsbusses geschaltet sind.

7. Stromrichtervorrichtung nach Anspruch 6, **dadurch gekennzeichnet, dass** die Steuermittel (140) eine Ladungspumpenschaltung umfassen, die dazu ausgelegt ist, an den JFET-Transistor eine Steuerspannung anzulegen.

8. Stromrichtervorrichtung nach einem der Ansprüche 3 bis 7, **dadurch gekennzeichnet, dass** die Steuermittel (140) Speichermittel umfassen, die einen Schwellenwert (S1) für die an den Anschlüssen des JFET-Transistors (T1) gemessene Spannung (V) speichern, oberhalb dessen der JFET-Transistor (T1) durch die Steuermittel (140) in den geöffneten Zustand gesteuert wird.

9. Stromrichtervorrichtung nach einem der Ansprüche 3 bis 8, **dadurch gekennzeichnet, dass** die Steuermittel (140) Speichermittel umfassen, die einen Schwellenwert (S2) für die zwischen der positiven Leitung (10) und der negativen Leitung (11) des Leistungsbusses gemessene Spannung speichern, oberhalb dessen der JFET-Transistor (T1) in den geöffneten Zustand gesteuert wird.

10. Stromrichtervorrichtung nach einem der Ansprüche 1 bis 9, **dadurch gekennzeichnet, dass** sie außerdem eine Vorrichtung umfasst, um das Gleichrichtermodul (12) vor den Überspannungen zu schützen.

11. Stromrichtervorrichtung nach Anspruch 10, **dadurch gekennzeichnet, dass** die Vorrichtung zum Schützen des Gleichrichtermoduls (12) vor den Überspannungen einen normalerweise geschlossenen Begrenzungstransistor (T3) des JFET-Typs und eine Zener-Diode (Z1), die beide zwischen der positiven Leitung (10) und der negativen Leitung (11) des Leistungsbusses parallel geschaltet sind, umfasst.

12. Stromrichtervorrichtung nach Anspruch 10, **dadurch gekennzeichnet, dass** die Vorrichtung zum Schützen des Gleichrichtermoduls (12) vor den Überspannungen einen Varistor (M1) des GMOV-Typs, der zwischen die positive Leitung (10) und die negative Leitung (11) des Leistungsbusses geschaltet ist, umfasst.
